# EUROPEAN PATENT APPLICATION

(11) **EP 3 780 605 A1**
(43) Date of publication of application: **17.02.2021**
(21) Application number: 18913435.6
(22) Date of filing: 04.04.2018
(51) Int. Cl.: H04N 19/124

(54) **ENCODING APPARATUS AND SYSTEM**

(71) Applicant: SZ DJI Technology Co., Ltd., Shenzhen, Guangdong 518057 (CN)
(72) Inventor: ZHANG, Jianhua, Shenzhen, Guangdong 518057 (CN); HAN, Bin, Shenzhen, Guangdong 518057 (CN); ZHAO, Wenjun, Shenzhen, Guangdong 518057 (CN); CUI, Ming, Shenzhen, Guangdong 518057 (CN)
(74) Representative: Goddar, Heinz J.
(86) International application number: PCT/CN2018/082023
(87) International publication number: WO 2019/191981

(57) **Abstract**

An encoding apparatus and system are provided. The encoding apparatus includes: a first buffer, configured to buffer a quantized coefficient of an image block that is input by a quantization circuit; an information generation circuit, configured to detect the quantized coefficient of the image block sequentially to obtain run-length encoding information; a second buffer, configured to buffer the run-length encoding information generated by the information generation circuit; and a processing circuit, configured to: when the second buffer stores run-length encoding information, read the run-length encoding information from the second buffer, read the quantized coefficient corresponding to the run-length encoding information from the first buffer, and output the run-length encoding information and the corresponding quantized coefficient to an entropy encoding circuit. In the foregoing technical solution, after run-length encoding information of several quantized coefficients is confirmed, a process of extracting the run-length encoding information and a process of performing entropy encoding on the quantized coefficients can be performed in parallel. Therefore, parallelism of the encoding apparatus is improved.

## Description

### COPYRIGHT NOTICE

A portion of the disclosure of this patent document contains material which is subject to copyright protection. The copyright owner has no objection to the facsimile reproduction by any of the patent document or the patent disclosure, as it appears in the Patent and Trademark Office patent file or records, but otherwise reserves all copyright rights whatsoever.

### TECHNICAL FIELD

This application relates to the video encoding/decoding field, and more specifically, to an encoding apparatus and system.

### BACKGROUND

A video encoding technology may compress video data to facilitate storage and transmission of the video data. Currently, the video encoding technology is extensively applied in various fields, such as the mobile terminal field and the unmanned aerial vehicle image transmission field.

Currently, some video encoding protocols require that before entropy encoding, level-run encoding should be performed on quantized alternating current (AC) coefficients first. Level-run information may be used to represent the quantity of non-zero AC coefficients that need to be encoded subsequently.

In the conventional technology, quantized coefficients need to be traversed twice during run-length encoding and entropy encoding. It is time-consuming. Therefore, encoding efficiency of the conventional technology is low.

### SUMMARY OF INVENTION

This application provides an encoding apparatus and system to improve encoding efficiency.

According to a first aspect, an encoding apparatus is provided, where the encoding apparatus includes: a first buffer, configured to buffer a quantized coefficient of an image block that is input by a quantization circuit; an information generation circuit, configured to detect the quantized coefficient of the image block sequentially to obtain run-length encoding information, where the run-length encoding information includes at least one of level-run information, zero-run information, and identification information of a direct current DC component coefficient; a second buffer, configured to buffer the run-length encoding information generated by the information generation circuit; and a processing circuit, configured to: when the second buffer stores run-length encoding information, read the run-length encoding information from the second buffer, read the quantized coefficient corresponding to the run-length encoding information from the first buffer, and output the run-length encoding information and the corresponding quantized coefficient to an entropy encoding circuit.

According to a second aspect, an encoding apparatus is provided, where the encoding apparatus includes: a transformation circuit, configured to generate a transformation coefficient of an image block; a scanning circuit, configured to convert the transformation coefficient from two-dimensional data to a one-dimensional data sequence; a quantization circuit, configured to quantize the one-dimensional data sequence to generate a quantized coefficient of the image block; and an entropy encoding circuit, configured to perform entropy encoding on the quantized coefficient.

According to a third aspect, an encoding system is provided, where the encoding system includes: the encoding apparatus according to the first aspect or the second aspect; and a memory, where the memory includes a ring storage space for storing a coded stream output by the encoding apparatus.

The encoding apparatus provided by this application isolates a quantized coefficient write logic from a quantized coefficient read logic by introducing the two buffers, the information generation circuit, and the processing circuit, so that after the run-length encoding information of several quantized coefficients is confirmed, a process of extracting the run-length encoding information and a process of performing entropy encoding on the quantized coefficients can be performed in parallel, and that hardware pipelining between run-length encoding and quantizing processes is not interrupted. Therefore, parallelism of the encoding apparatus is improved.

### BRIEF DESCRIPTION OF DRAWINGS

FIG. 1 is an exemplary diagram of a relationship among an image frame, a slice, a component, and a coded stream;
FIG. 2 is an arrangement pattern of four components of an image in a RAW format;
FIG. 3 is another exemplary diagram of a relationship among an image frame, a slice, a component, and a coded stream;
FIG. 4 is a schematic diagram of a general architecture of an encoding apparatus;
FIG. 5 is a schematic diagram of a hardware architecture of an encoding apparatus according to an embodiment of this application;
FIG. 6 is a time sequence diagram of circuit modules of a hardware architecture of an encoding apparatus shown in FIG. 5;
FIG. 7 is a schematic diagram of a hardware architecture of an encoding apparatus according to another embodiment of this application;
FIG. 8 is a time sequence diagram of circuit modules of a hardware architecture of an encoding apparatus shown in FIG. 7;
FIG. 9 is a schematic diagram of a hardware architecture of an encoding apparatus according to still another embodiment of this application;
FIG. 10 is a time sequence diagram of circuit modules of a hardware architecture of an encoding apparatus shown in FIG. 9;
FIG. 11 is a schematic diagram of a hardware architecture of an encoding apparatus according to still another embodiment of this application;
FIG. 12 is a time sequence diagram of circuit modules of a hardware architecture of an encoding apparatus shown in FIG. 11;
FIG. 13 is a flowchart of a software algorithm of run-length encoding and entropy encoding processes according to an embodiment of this application;
FIG. 14 is a schematic diagram of an encoding apparatus according to an embodiment of this application;
FIG. 15 is a schematic diagram of an encoding apparatus according to another embodiment of this application;
FIG. 16 is a flowchart of a control logic of an information generation circuit according to an embodiment of this application;
FIG. 17 is a flowchart of a control logic of a processing circuit according to an embodiment of this application;
FIG. 18 is a schematic diagram of an encoding apparatus according to still another embodiment of this application;
FIG. 19 is a schematic diagram of an encoding system according to an embodiment of this application; and
FIG. 20 is an exemplary diagram of a memory structure having a ring buffer space according to an embodiment of this application.

### DETAILED DESCRIPTION

It should be noted that, a format of an image that needs to be encoded is not specifically limited in embodiments of this application. The format may be RGB, or may be YUV, or may be RAW.

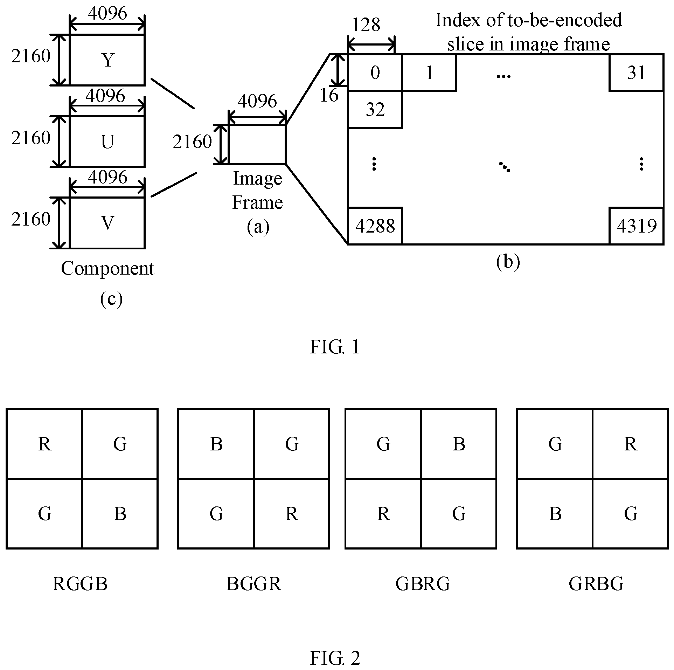

A video coder generally performs encoding by using an image block as a unit. The image block may also be referred to as a slice sometimes. A frame of an image may include one or more slices, where each slice may include a plurality of components (such as RGB and YUV) of the image. The following describes a relationship among a coded stream, an image frame, a slice, and a component with reference to FIG. 1 to FIG. 3 by using examples.

As an example, it is assumed that a specification of a video image is 4K, and that a format of the image is YUV. As shown in (a) in FIG. 1, a size of an image frame in a video of a 4K specification may be 4096 × 2160. As shown in (b) in FIG. 1, the image frame may be divided in units of 128 × 16, to obtain 4320 slices in total, where each slice may be encoded and decoded independently. A pixel in the image generally includes a plurality of components (a Y component, a U component, and a V component), as shown in (c) in FIG. 1. After the image frame in (a) in FIG. 1 is encoded, a coded stream may be obtained. The coded stream includes a frame header of the image frame, and frame data corresponding to the frame header may include coded stream information of 4320 sub-coded streams. A sub-coded stream may include a header file, and coded stream information corresponding to Y, U, and V components.

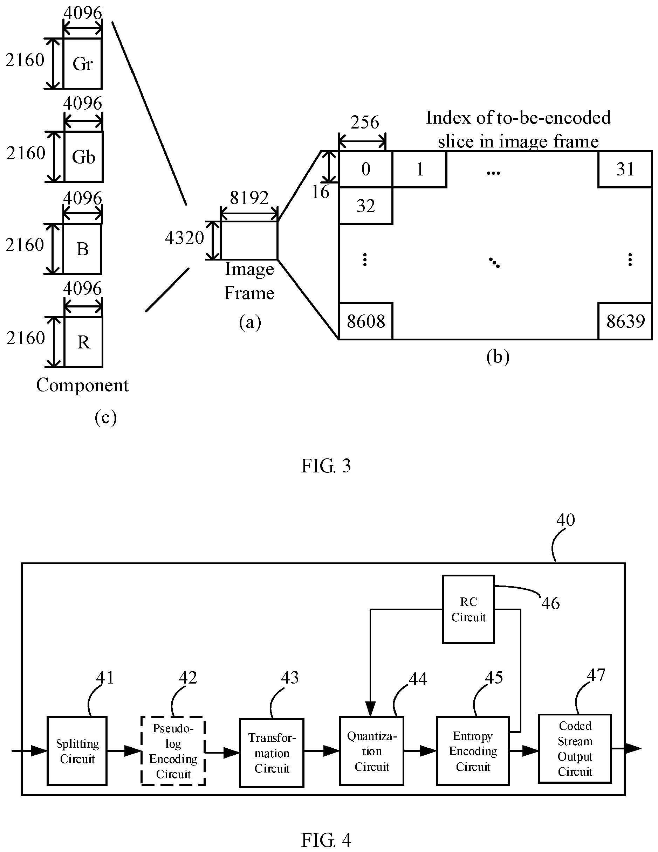

As another example, it is assumed that a specification of a video image is 8K, and that a format of the image is RAW. An image in a RAW format generally has four components: Gr, Gb, B, and R. As shown in FIG. 2, the four components may have four arrangement modes, and form four Bayer patterns. As shown in (a) in FIG. 3, a size of an image frame in a video of an 8K specification may be 8192 × 4320. As shown in (b) in FIG. 3, the image frame may be divided in units of 256 × 16, to obtain 8640 slices in total, where each slice may be encoded and decoded independently. A pixel in the image generally includes a plurality of components (a G component, a B component, and an R component), as shown in (c) in FIG. 3. After the image frame in (a) in FIG. 3 is encoded, a coded stream may be obtained. The coded stream includes a frame header of the image frame, and frame data corresponding to the frame header may include coded stream information of 8640 sub-coded streams. A sub-coded stream may include a header file, and coded stream information corresponding to Gr, Gb, B, and R components.

Further, a slice may include several macro blocks. A macro block may include several pixels, such as 16 × 16 pixels. A macro block may be further divided into several small code blocks. Using a macro block including 16 × 16 pixels as an example, the macro block may include four code blocks, where a size of each code block may be 8 × 8.

The following describes a general architecture of a video coder with reference to FIG. 4 by using an example.

As shown in FIG. 4, the video coder 40 may include one or any combination of the following circuits: a splitting circuit 41, a pseudo-log encoding circuit 42, a transformation circuit 43, a quantization circuit 44, an entropy encoding circuit 45, a rate control (RC) circuit 46, a coded stream output circuit 47, and the like.

The splitting circuit 41 may split a to-be-encoded image frame into one or more image blocks that may be encoded and decoded independently, and perform independent encoding processing in units of image blocks.

The pseudo-log encoding (PLE) circuit 42 may convert data of an image block from linear data to non-linear data (or convert an image block from a linear domain to a non-linear domain). It should be noted that, the pseudo-log encoding circuit 42 is an optional circuit in the video coder 40. In some embodiments, a transformation operation may be performed on the image block directly without using the pseudo-log encoding circuit 42.

The transformation circuit 43 may be configured to generate a transformation coefficient of the image block. A purpose of transformation is to reduce correlation (such as spatial correlation) of image data from a perspective of a frequency domain, to reduce a bit rate. The transformation circuit 43 may correspond to a plurality of transformation modes, such as Fourier transformation or discrete cosine transformation (DCT).

The quantization circuit 44 may be configured to quantize the transformation coefficient output by the transformation circuit 43 to generate a quantized coefficient. The quantization circuit 44 mainly uses a feature that human eyes have low sensitivity to a high frequency signal, and discards some high frequency information in transformation data, thereby limiting the transformation coefficient in a specific range, to further reduce the bit rate.

The entropy encoding circuit 45 may also be referred to as a variable length coder (VLC). Entropy encoding may be, for example, Huffman encoding, or may be arithmetic encoding. Entropy encoding may represent the quantized coefficient by using fewer coded streams, to implement lossless compression of the quantized coefficient. Optionally, before entropy encoding, run-length encoding may be further performed on the quantized coefficient. Run-length encoding may represent the quantized coefficient by using two run-level factors, to further simplify data. Run-length encoding and entropy encoding may be collectively referred to as entropy encoding sometimes.

The RC circuit 46 generally uses a mode such as prediction to calculate a quantization parameter used by a to-be-encoded image block.

The bit rate output circuit 47 may add header information to a coded stream header, thereby packetizing a coded stream for outputting.

The foregoing describes the general hardware architecture of the video coder. Based on the general hardware architecture of the video coder, this embodiment of this application provides several hardware architectures having high parallelism. The following describes in detail the hardware architectures having high parallelism.

Optionally, in an embodiment, the transformation circuit 43 and the quantization circuit 44 in FIG. 4 may be configured such that the transformation circuit 43 and the quantization circuit 44 process a same quantity of pixels in each clock cycle. In other words, a processing rate of the transformation circuit 43 in each clock cycle matches that of the quantization circuit 44. Therefore, tight hardware pipelining can be implemented between the transformation circuit 43 and the quantization circuit 44. Further, the quantization circuit 44 and the entropy encoding circuit 45 may be configured such that the quantization circuit 44 and the entropy encoding circuit 45 process a same quantity of pixels in each clock cycle. Assuming that the quantization circuit 44 processes t pixels (t is a positive integer greater than 1) in each clock cycle, t parallel VLCs may be disposed in the entropy encoding circuit 45, so that the entropy encoding circuit 45 can also process t pixels in each clock cycle.

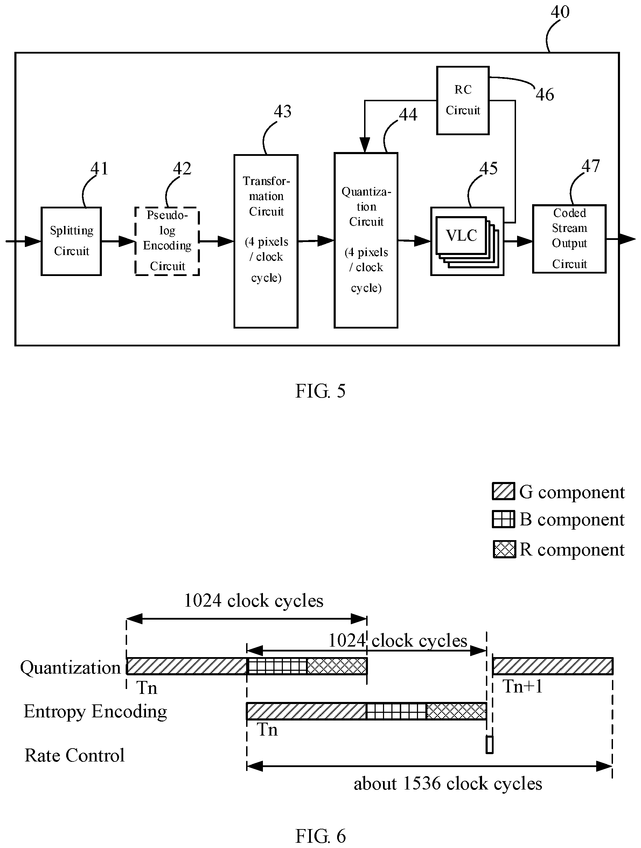

Using an example in which a format of an image block is RAW, a slice includes 16 macro blocks, and each macro block includes 16 × 16 pixels, as shown in FIG. 5, processing rates of the transformation circuit 43 and the quantization circuit 44 may be configured as four pixels per clock cycle, and four parallel VLCs are disposed in the entropy encoding circuit 45. Because one VLC may process one quantized coefficient in one clock cycle, the entropy encoding circuit 45 may process four quantized coefficients in each clock cycle, that is, a processing rate of the entropy encoding circuit 45 is also four pixels per clock cycle.

FIG. 6 is a processing time sequence diagram of the hardware architecture shown in FIG. 5 in a worst case (that is, all coefficients of a component are non-zero AC coefficients; in this case, level-run information can be determined only after all the quantized coefficients of the component are quantized, and then entropy encoding can be started). Specifically, the transformation circuit 43 and the quantization circuit 44 may both process four pixels in one clock cycle. A processing rate of the transformation circuit 43 matches that of the quantization circuit 44, and tight data pipelining may be implemented between the transformation circuit 43 and the quantization circuit 44. Because a slice includes 16 macro blocks, and each macro block includes 16 × 16 pixels, time of processing one slice by the quantization circuit 44 is 1024 clock cycles. Assuming that level-run information of non-zero AC coefficients needs to be first encoded before quantized coefficients enter a VLC, in the worst case, the VLC needs to wait for completion of quantization of a component of one slice before the VLC can perform entropy encoding. Therefore, the VLC needs to wait for 512 clock cycles in the worst case before starting to perform entropy encoding on the quantized coefficients. Considering that after completion of encoding, time of performing rate control to calculate a quantization parameter of a next slice is about 10 clock cycles, 1536 clock cycles are required for the four VLCs to complete encoding of one slice in the worst case.

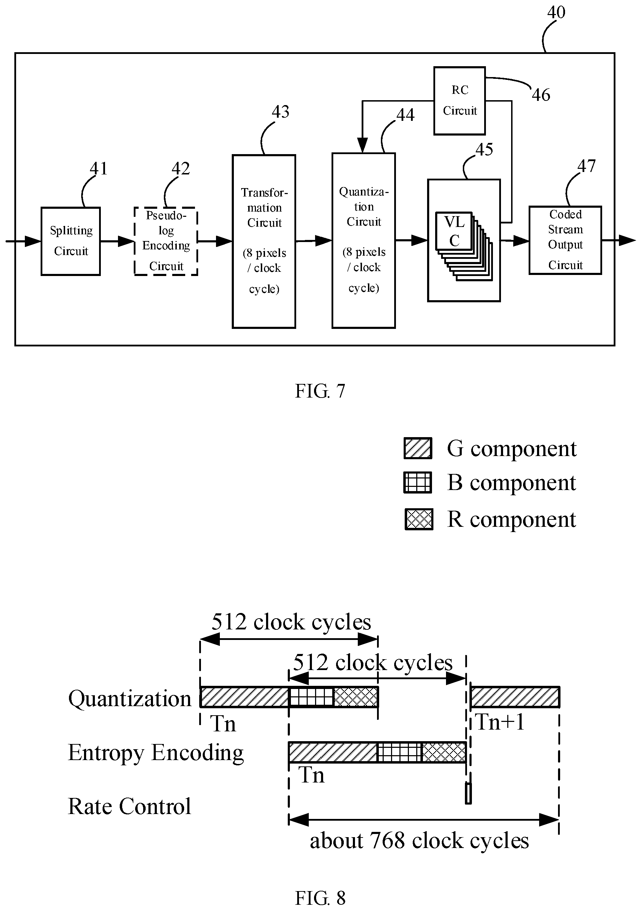

Still using the example in which a format of an image block is RAW, a slice includes 16 macro blocks, and each macro block includes 16 × 16 pixels, as shown in FIG. 7, processing rates of the transformation circuit 43 and the quantization circuit 44 may be configured as eight pixels per clock cycle, and eight parallel VLCs are disposed in the entropy encoding circuit 45. Because one VLC may process one quantized coefficient in one clock cycle, the entropy encoding circuit 45 may process eight quantized coefficients in each clock cycle, that is, a processing rate of the entropy encoding circuit 45 is also eight pixels per clock cycle.

FIG. 8 is an encoding time sequence diagram of the hardware architecture shown in FIG. 7 in a worst case. Specifically, the transformation circuit 43 and the quantization circuit 44 may both process eight pixels in one clock cycle. A processing rate of the transformation circuit 43 matches that of the quantization circuit 44, and tight data pipelining may be implemented between the transformation circuit 43 and the quantization circuit 44. Because a slice includes 16 macro blocks, and each macro block includes 16 × 16 pixels, time of processing one slice by the quantization circuit 44 is 512 clock cycles. Assuming that level-run information of non-zero AC coefficients needs to be first encoded before quantized coefficients enter a VLC, in the worst case, the VLC needs to wait for completion of quantization of a component of one slice before the VLC can perform entropy encoding. Therefore, the VLC needs to wait for 256 clock cycles in the worst case before starting to perform entropy encoding on the quantized coefficients. Considering that after completion of encoding, time of performing rate control to calculate a quantization parameter of a next slice is about 10 clock cycles, 768 clock cycles are required for the eight VLCs to complete encoding of one slice in the worst case.

Optionally, in another embodiment, the transformation circuit 43 and the quantization circuit 44 in FIG. 4 may be configured such that the transformation circuit 43 and the quantization circuit 44 process a same quantity of pixels in each clock cycle. In other words, a processing rate of the transformation circuit 43 in each clock cycle matches that of the quantization circuit 44. Therefore, tight hardware pipelining can be implemented between the transformation circuit 43 and the quantization circuit 44. Further, the quantization circuit 44 and the entropy encoding circuit 45 may be configured such that the quantity of pixels that the quantization circuit 44 processes in each clock cycle is greater than the quantity of pixels that the entropy encoding circuit 45 processes in each clock cycle. For example, the quantity of pixels that the quantization circuit 44 processes in each clock cycle is an integer multiple (for example, twice) of the quantity of pixels that the entropy encoding circuit 45 processes in each clock cycle.

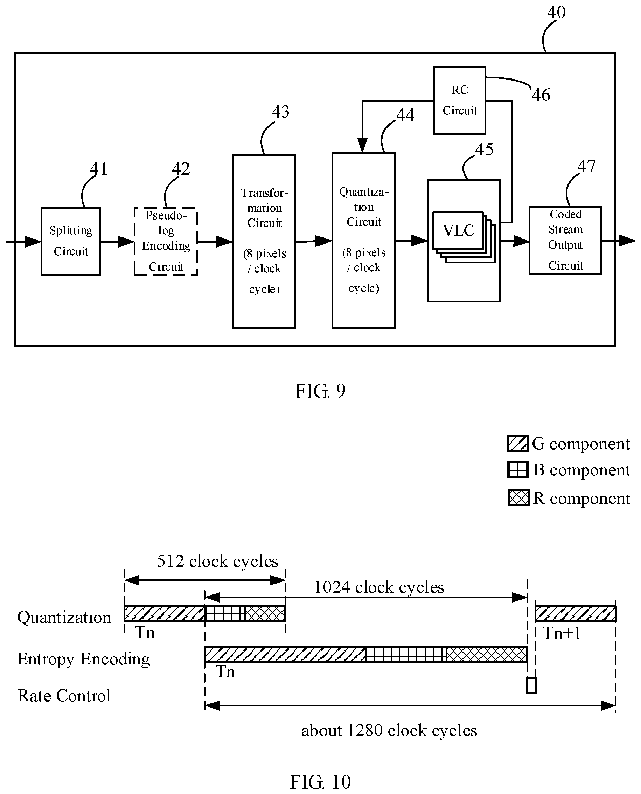

Using an example in which a format of an image block is RAW, a slice includes 16 macro blocks, and each macro block includes 16 × 16 pixels, as shown in FIG. 9, processing rates of the transformation circuit 43 and the quantization circuit 44 may be configured as eight pixels per clock cycle, and four parallel VLCs are disposed in the entropy encoding circuit 45. Because one VLC may process one quantized coefficient in one clock cycle, the entropy encoding circuit 45 may process four quantized coefficients in each clock cycle, that is, a processing rate of the entropy encoding circuit 45 is four pixels per clock cycle. As can be seen, in this embodiment, a processing rate of the quantization circuit 44 is twice that of the entropy encoding circuit 45.

FIG. 10 is a processing time sequence diagram of the hardware architecture shown in FIG. 9 in a worst case. Specifically, the transformation circuit 43 and the quantization circuit 44 may both process eight pixels in one clock cycle. A processing rate of the transformation circuit 43 matches that of the quantization circuit 44, and tight data pipelining may be implemented between the transformation circuit 43 and the quantization circuit 44. Because a slice includes 16 macro blocks, and each macro block includes 16 × 16 pixels, time of processing one slice by the quantization circuit 44 is 512 clock cycles. Assuming that level-run information of non-zero AC coefficients needs to be first encoded before quantized coefficients enter a VLC, in the worst case, the VLC needs to wait for completion of quantization of a component of one slice before the VLC can perform entropy encoding. Therefore, the VLC needs to wait for 256 clock cycles in the worst case before starting to perform entropy encoding on the quantized coefficients. Considering that after completion of encoding, time of performing rate control to calculate a quantization parameter of a next slice is about 10 clock cycles, 1280 clock cycles are required for the four VLCs to complete encoding of one slice in the worst case.

Optionally, in still another embodiment, the transformation circuit 43 and the quantization circuit 44 in FIG. 4 may be configured as follows: The transformation circuit 43 and the quantization circuit 44 process a same quantity of pixels in each clock cycle. In other words, a processing rate of the transformation circuit 43 in each clock cycle matches that of the quantization circuit 44. Therefore, tight hardware pipelining can be implemented between the transformation circuit 43 and the quantization circuit 44. Further, the quantization circuit 44 and the entropy encoding circuit 45 may be configured such that the quantity of pixels that the quantization circuit 44 processes in each clock cycle is less than the quantity of pixels that the entropy encoding circuit 45 processes in each clock cycle. For example, the quantity of pixels that the entropy encoding circuit 45 processes in each clock cycle is an integer multiple of the quantity of pixels that the quantization circuit 44 processes in each clock cycle.

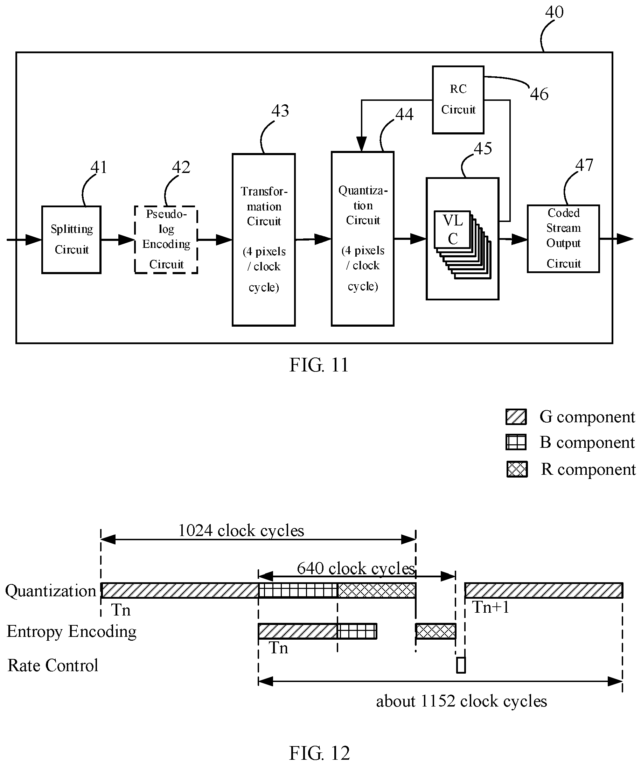

Using an example in which a format of an image block is RAW, a slice includes 16 macro blocks, and each macro block includes 16 × 16 pixels, as shown in FIG. 11, processing rates of the transformation circuit 43 and the quantization circuit 44 may be configured as four pixels per clock cycle, and eight parallel VLCs are disposed in the entropy encoding circuit 45. Because one VLC may process one quantized coefficient in one clock cycle, the entropy encoding circuit 45 may process eight quantized coefficients in each clock cycle, that is, a processing rate of the entropy encoding circuit 45 is eight pixels per clock cycle. As can be seen, in this embodiment, a processing rate of the entropy encoding circuit 45 is twice that of the quantization circuit 44.

FIG. 12 is a processing time sequence diagram of the hardware architecture shown in FIG. 11 in a worst case. Specifically, the transformation circuit 43 and the quantization circuit 44 may both process four pixels in one clock cycle. A processing rate of the transformation circuit 43 matches that of the quantization circuit 44, and tight data pipelining may be implemented between the transformation circuit 43 and the quantization circuit 44. Because a slice includes 16 macro blocks, and each macro block includes 16 × 16 pixels, time of processing one slice by the quantization circuit 44 is 1024 clock cycles. Assuming that level-run information of non-zero AC coefficients needs to be first encoded before quantized coefficients enter a VLC, in the worst case, the VLC needs to wait for completion of quantization of a component of one slice before the VLC can perform entropy encoding. Therefore, the VLC needs to wait for 512 clock cycles in the worst case before starting to perform entropy encoding on the quantized coefficients. Considering that after completion of encoding, time of performing rate control to calculate a quantization parameter of a next slice is about 10 clock cycles, 1152 clock cycles are required for the four VLCs to complete encoding of one slice in the worst case.

In other embodiments, alternatively, a relationship between processing rates of the quantization circuit 44 and the entropy encoding circuit 45 may not be an integer multiple relationship. For example, the quantization circuit 44 processes eight pixels in each clock cycle, and the entropy encoding circuit 45 processes five pixels in each clock cycle.

The relationship between the processing rates of the quantization circuit 44 and the entropy encoding circuit 45 is set to be consistent or set to an integer multiple relationship to simplify a time sequence relationship between them and improve encoding efficiency.

As mentioned above, in a conventional encoding mode, because quantized coefficients need to be traversed many times before entropy encoding, encoding efficiency is low.

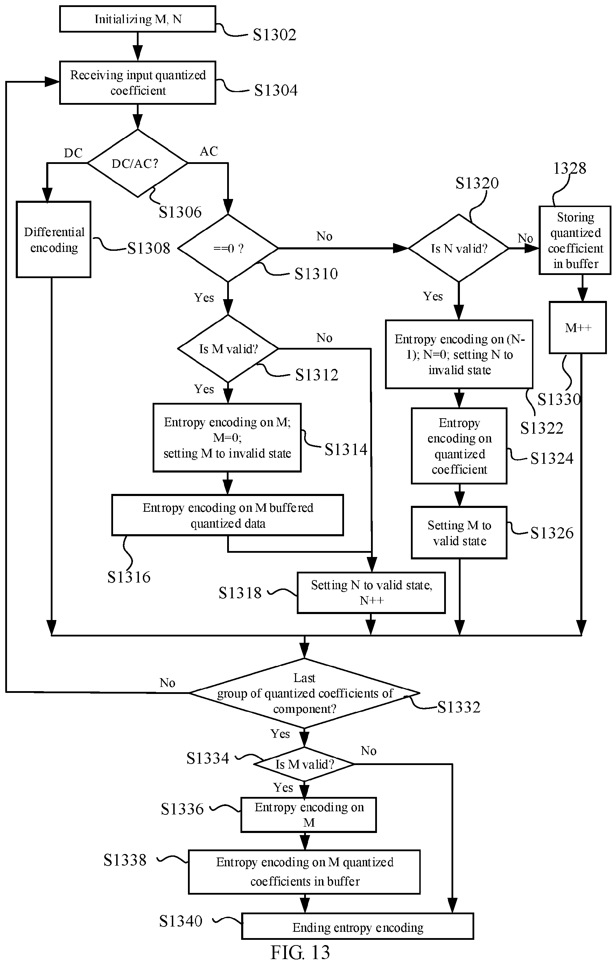

To improve encoding efficiency, in an embodiment of this application, a software algorithm procedure between conventional run-length encoding and entropy encoding is first changed to an implementation shown in FIG. 13, to avoid traversing quantized coefficients many times and improve parallelism of an encoding apparatus. The following describes the software algorithm procedure between run-length encoding and entropy encoding in detail with reference to FIG. 13.

First, two integer variables M and N are defined, where N may be used to indicate zero-run, and M may be used to indicate level-run. As shown in FIG. 13, the software algorithm procedure between run-length encoding and entropy encoding according to this embodiment of this application includes step S1302 to step S1340.

Step S1302: initializing M and N.

First, values of M and N may be both set to 0. Second, N is set to a valid state first, and M is set to an invalid state.

Step S1304: receiving an input quantized coefficient.

The quantized coefficient is a quantized coefficient of a component of an image block. The component may be, for example, one of RGB components, or may be one of YUV components. This is not limited in this embodiment of this application. The quantized coefficients may be received from the quantization circuit 44 shown in FIG. 4.

Step S1306: determining whether the quantized coefficient is a DC coefficient or an AC coefficient.

If the quantized coefficient is a DC coefficient, perform step S1308; or if the quantized coefficient is an AC coefficient, perform step S1310.

Step S1308: performing differential encoding on the DC coefficient.

Different from the AC coefficient, the DC coefficient generally uses differential encoding. For a specific encoding mode of differential encoding, refer to the conventional technology. Details are not described herein.

Step S1310: determining whether the AC coefficient is a zero AC coefficient or a non-zero AC coefficient.

If the AC coefficient is a zero AC coefficient, perform step S1312; if the AC coefficient is a non-zero AC coefficient, perform step S1320.

Step S1312: determining whether M is in a valid state.

If M is in the valid state, perform step S1314; if M is in an invalid state, perform step S1318.

Step S1314: performing entropy encoding on M, setting the value of M to 0, and setting M to the invalid state.

M indicates level-run, and performing entropy encoding on M means performing entropy encoding on level-run information.

Step S1316: performing entropy encoding on M pieces of quantized data that are buffered.

After the level-run information is encoded, entropy encoding may be immediately performed on quantized data corresponding to the level-run information.

Step S1318: setting N to the valid state, and adding 1 to the value of N.

Step S1320: determining whether N is in the valid state.

If N is in the valid state, perform step S1322; if N is in the invalid state, perform step S1328.

Step S1322: performing entropy encoding on (N-1), setting the value of N to 0, and setting N to the invalid state.

Performing entropy encoding on (N-1) is equivalent to performing entropy encoding on zero-run information.

Step S1324: performing entropy encoding on the quantized coefficient.

That is, perform entropy encoding on the quantized coefficient corresponding to the zero-run information.

Step S1326: setting M to the valid state.

Step S1328: storing the quantized data in a buffer.

Step S1330: adding 1 to the value of M.

Step S1332: determining whether the input quantized coefficient is the last group of quantized coefficients of the component.

If the quantized coefficient received in step S1304 is not the last group of quantized coefficients of the component, perform step S1332 again; if the quantized coefficient received in step S1306 is the last group of quantized coefficients of the component, perform step S1334.

Step S1334: determining whether M is in the valid state.

If M is in the valid state, perform step S1336; if M is in the invalid state, perform step S1340.

Step S1336: performing entropy encoding on M.

Step S1338: performing entropy encoding on M quantized coefficients in the buffer.

Step S1340: ending the entropy encoding procedure.

As can be seen from the implementation of the software procedure, in the software algorithm procedure of the run-length encoding and entropy encoding processes according to this embodiment of this application, if run-length encoding information (M or N) is confirmed, entropy encoding may be performed immediately. This can improve parallelism of the encoding process.

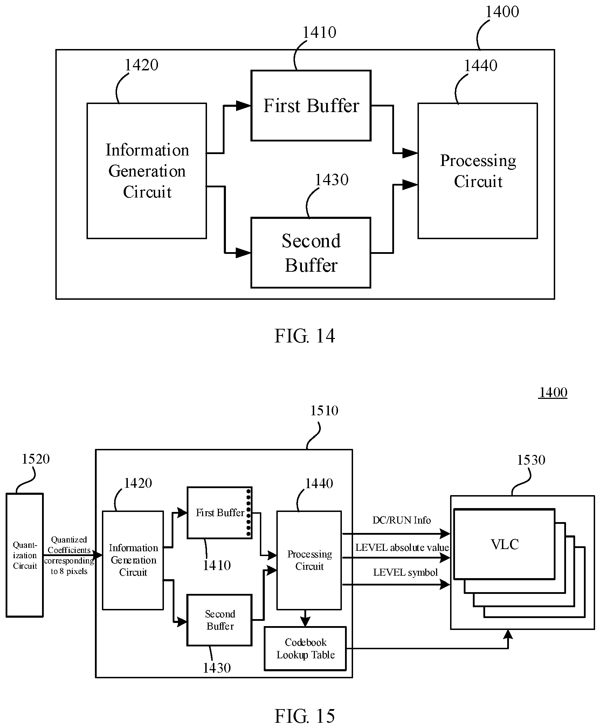

On a basis of the software algorithm procedure, an embodiment of this application provides an encoding apparatus, which may not only implement the foregoing algorithm procedure, but also ensure that hardware pipelining between a run-length encoding circuit and a previous circuit (such as a quantization circuit) is not interrupted. The following describes the encoding apparatus in detail with reference to FIG. 14.

As shown in FIG. 14, the encoding apparatus 1400 may include a first buffer 1410, an information generation circuit 1420, a second buffer 1430, and a processing circuit 1440.

The first buffer 1410 may be configured to buffer a quantized coefficient of an image block. The first buffer 1410 may buffer a quantized coefficient of an image block that is input by an external quantization circuit. Therefore, the first buffer 1410 may also be referred to as a quantized coefficient buffer. The first buffer 1410 may be, for example, a buffer based on FIFO (first in first out). In this embodiment, the first buffer 1410 may be referred to as a Quant FIFO.

The information generation circuit 1420 may be configured to detect the quantized coefficients of the image block sequentially to obtain run-length encoding information. The run-length encoding information includes at least one of level-run information, zero-run information, and identification information of direct current (DC) coefficients. The level-run information is a run length of a level (that is, non-zero AC coefficient). In other words, the level-run information may be used to indicate the quantity of continuous non-zero AC coefficients that need to be encoded subsequently. The zero-run information may be used to indicate the run length of zero (that is, zero AC coefficient). In other words, the zero-run information may be used to indicate the quantity of zero AC coefficients that occur continuously. The DC coefficient may be used to indicate that to-be-encoded quantized coefficient is a DC coefficient.

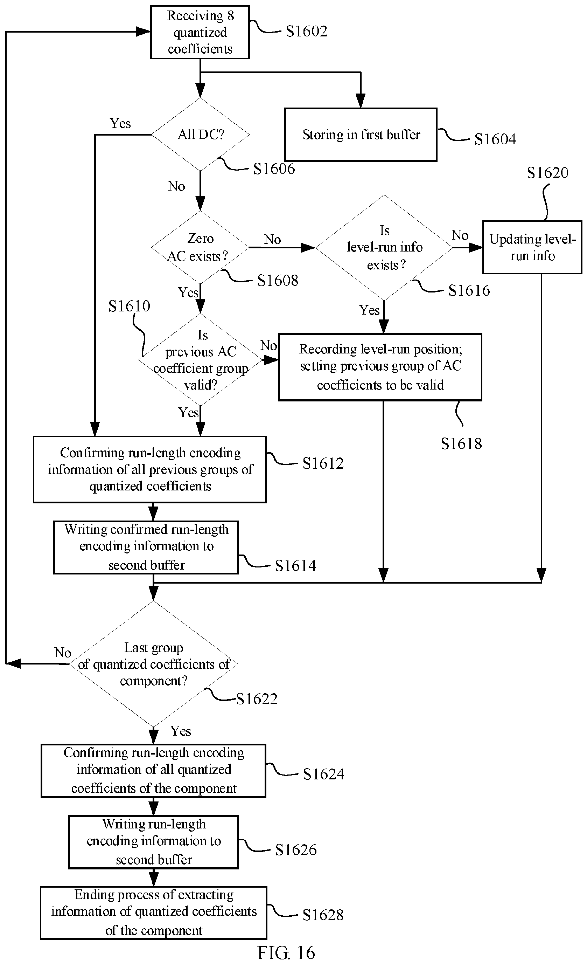

It may be understood that, the information generation circuit 1420 may perform other operations than encoding-related operations in FIG. 13, for example, configuring and adjusting values of M and N. The following further describes a specific implementation of the information generation circuit 1420 in detail with reference to FIG. 16. Details are not described herein.

The second buffer 1430 may be configured to buffer the run-length encoding information generated by the information generation circuit 1420. Therefore, the second buffer 1430 may also be referred to as a run-length encoding information buffer. The second buffer 1430 may be, for example, a FIFO-based buffer. In this embodiment, the second buffer 1430 may be referred to as a RUN FIFO. It should be understood that, if run-length encoding information is extracted (or if run-length encoding information of some quantized coefficients is confirmed), the information generation circuit 1420 stores the information in the second buffer 1430, so that the processing circuit 1440 processes the information in time.

The processing circuit 1440 may be configured to: when the second buffer 1430 stores run-length encoding information, read the run-length encoding information from the second buffer 1430, read the quantized coefficient corresponding to the run-length encoding information from the first buffer 1410, and output the run-length encoding information and the corresponding quantized coefficient to an entropy encoding circuit at an output end.

The processing circuit 1440 may continuously detect whether the second buffer 1430 is not empty, and once detecting that the second buffer 1430 is not empty (indicating that the second buffer 1430 has stored confirmed run-length encoding information), read the run-length encoding information from the second buffer 1430, and read, from the first buffer 1410, the quantized coefficient corresponding to the run-length encoding information (or a quantized coefficient confirmed by the run-length encoding information). There is a plurality of modes available for the processing circuit 1440 to read, from the first buffer 1410, the quantized coefficient corresponding to the run-length encoding information. For example, the first buffer 1410 and the second buffer 1430 may be both set to FIFO-based buffers. After the processing circuit 1440 obtains a piece of run-length encoding information from a head of a FIFO queue of the second buffer 1430, if the run-length encoding information is level-run information, the processing circuit 1440 may read, from a FIFO queue of the first buffer 1410, a quantized coefficient equal to a level-run value based on a first in first out principle. For another example, the information generation circuit 1420 may pre-mark a correspondence between a quantized coefficient stored in the first buffer 1410 and run-length encoding information stored in the second buffer 1430. The processing circuit 1440 may read, from the second buffer 1430 based on the correspondence, the quantized coefficient corresponding to the run-length encoding information.

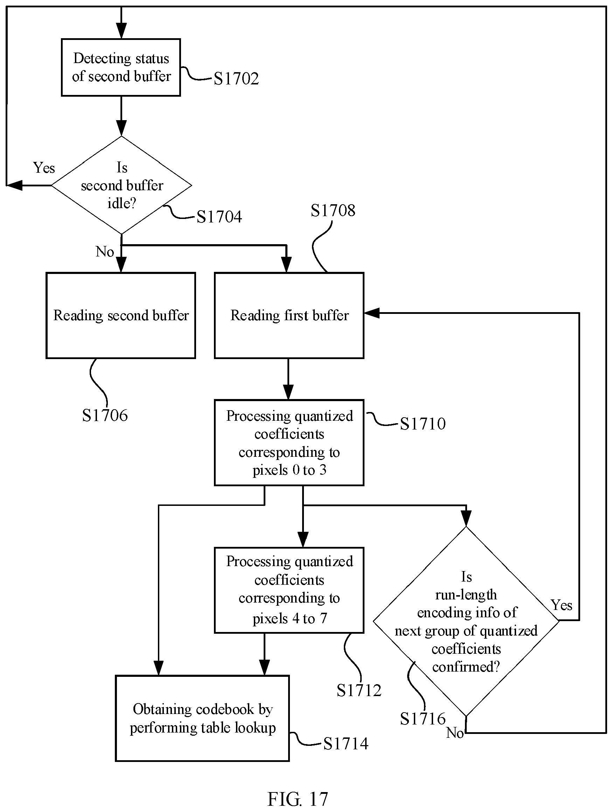

Before outputting the run-length encoding information and the corresponding quantized coefficient to the entropy encoding circuit, the processing circuit 1440 may further obtain, in a table lookup mode, a codebook on which entropy encoding needs to be performed. The following describes an implementation of the processing circuit 1440 in detail with reference to FIG. 17.

The encoding apparatus 1400 provided by this embodiment of this application isolates a quantized coefficient write logic from a quantized coefficient read logic by introducing the two buffers 1410 and 1430, the information generation circuit 1420, and the processing circuit 1440, so that after run-length encoding information of several input quantized coefficients is confirmed, a subsequent entropy encoding process may be started immediately. In other words, after the run-length encoding information of the several input quantized coefficients is confirmed, a process of extracting the run-length encoding information and a process of performing entropy encoding on the quantized coefficients can be performed in parallel, and that hardware pipelining between run-length encoding and quantizing processes is not interrupted. Therefore, parallelism of the encoding apparatus is improved.

A plurality of connection relationships may exist among the information generation circuit 1420, the quantization circuit, the first buffer 1410, and the second buffer 1430. As an example, an input end of the information generation circuit 1420 may be connected to the quantization circuit, and an output end of the information generation circuit 1420 is connected to the first buffer 1410 and the second buffer 1430. In this embodiment, the information generation circuit 1420 may be configured to: receive the quantized coefficient input by the quantization circuit; detect the input quantized coefficient, and when obtaining the run-length encoding information, store the obtained run-length encoding information in the second buffer 1430; and store the input quantized coefficient in the first buffer 1410. As another example, the first buffer 1410 may be directly connected to the quantization circuit, and store the quantized coefficient input by the quantization circuit in the first buffer 1410. The information generation circuit 1420 may not be connected to the first buffer 1410, but is connected only to the quantization circuit and the second buffer 1430.

As shown in FIG. 15, the first buffer 1410, the information generation circuit 1420, the second buffer 1430, and the processing circuit 1440 jointly form a run-length encoding circuit 1510 in the encoding apparatus 1400, where the first buffer 1410 and the second buffer 1430 are both FIFO-based buffers. The encoding apparatus 1400 may further include a quantization circuit 1520 and an entropy encoding circuit 1530. From a perspective of the run-length encoding circuit 1510, by using the first buffer 1410 and the second buffer 1420, an interface logic (hereinafter referring to as a logic of a write side) between the run-length encoding circuit 1510 and the quantization circuit 1520 is isolated from an interface logic (hereinafter referred to as a logic of a read side) between the run-length encoding circuit 1510 and the processing circuit 1440. The logic of the write side is controlled by the information generation circuit 1420, and the logic of the read side is controlled by the processing circuit 1440.

The following provides more detailed exemplary descriptions about implementations of the information generation circuit 1420 and the processing circuit 1440 by using an example in which the quantization circuit 1520 processes quantized data corresponding to eight pixels in each clock cycle, and the entropy encoding circuit includes four VLCs and performs entropy encoding on quantized coefficients corresponding to four pixels in each clock cycle.

Because the quantization circuit 1520 processes quantized data corresponding to eight pixels in each clock cycle, the quantization circuit 1520 outputs eight quantized coefficients to the run-length encoding circuit 1510 in each clock cycle. Run-length encoding information of the eight quantized coefficients may be extracted in the information generation circuit 1420, and then the eight quantized coefficients are stored in the first buffer 1410. If run-length encoding information of some quantized coefficients is confirmed, the information generation circuit 1420 may write the run-length encoding information to the second buffer 1430. The processing circuit 1440 may continuously detect a status of the second buffer 1430. If the second buffer 1430 is not empty, it indicates that run-length encoding information of quantized coefficients is confirmed. The processing circuit 1440 reads data in the first buffer 1410 and the second buffer 1430, combines the run-length encoding information output by the second buffer 1430 with the quantized coefficients output by the first buffer 1410 to perform a series of processing (for example, perform a differential operation on a DC coefficient, and calculate an absolute value and a symbol value of an AC coefficient), and obtains a codebook of a to-be-encoded value by performing a table lookup. Then the processing circuit 1440 may transmit processed data to four parallel paths in the entropy encoding circuit 1430, and the entropy encoding circuit 1530 performs parallel processing on the data output by the processing circuit 1440.

FIG. 16 is an exemplary diagram of a detailed procedure of the information generation circuit 1420 in the encoding architecture shown in FIG. 15. It should be understood that, in FIG. 16, eight quantized coefficients are considered as a group of quantized coefficients, and quantized coefficients are processed in units of groups. In general, the procedure in FIG. 16 is approximately as follows. First, a group of input quantized coefficients are determined, that is, whether the coefficients are all DC coefficients is determined. If a group of quantized coefficients are all DC coefficients, run information (including level-run information or zero-run information) is not generated. In this case, identification information of the DC coefficients may be directly written to a Run FIFO. If a group of quantized coefficients are not all DC coefficients, whether any zero-AC coefficient exists in the eight quantized coefficients is further determined. If a zero-AC coefficient exists, it means that run-length encoding information of all quantized coefficients previously input may be determined, that is, data of all the quantized coefficients previously input may be transmitted by the processing circuit 1440 to the entropy encoding circuit 1630 for encoding.

As shown in FIG. 16, a processing path of the information generation circuit 1420 includes step S1602 to step S1628.

Step S1602: receiving eight quantized coefficients of a component.

As shown in FIG. 15, because the quantization circuit 1620 processes quantized coefficients corresponding to eight pixels in each clock cycle, the quantization circuit 1620 outputs eight quantized coefficients to the information generation circuit 1420 in each clock cycle.

Step S1604: storing the eight quantized coefficients in the first buffer.

Step S1606: determining whether the eight quantized coefficients are all DC coefficients.

If the eight quantized coefficients are not all DC coefficients, perform step S1608; if the eight quantized coefficients are all DC coefficients, perform step S1612.

Step S1604 and step S1606 may be performed in parallel, or may be performed sequentially. This is not limited in this embodiment of this application.

Step S1608: determining whether any zero AC coefficient exists.

If a zero AC coefficient exists, perform step S1610; if no zero AC coefficient exists, perform step S1616.

Step S1610: determining whether a previous AC coefficient group is valid.

As shown in FIG. 15, the quantization circuit 1620 inputs a group of quantized coefficients in each clock cycle, where each group of quantized coefficients includes eight quantized coefficients. In this embodiment of this application, determining is performed in units of groups. That a previous group of AC coefficients is valid indicates that level-run information of the previous group of AC coefficients has been confirmed, and that subsequent entropy encoding may be performed.

If the previous group of AC coefficients is valid, perform step S1612; if the previous group of AC coefficients is invalid, perform step S1618.

Step S1612: confirming run-length encoding information of all previous groups of quantized coefficients.

Step S1614: writing the confirmed run-length encoding information to the second buffer.

Step S1616: determining whether any level-run information exists.

If level-run information exists, perform step S1618; if no level-run information exists, perform step S1620.

Step S1618: recording a level-run position, and setting the previous group of AC coefficients to "valid".

Step S1620: updating level-run information.

That is, update a level-run counter.

Step S1622: determining whether the quantized coefficients input in step S1602 are the last group of quantized coefficients of the component.

If the quantized coefficients input in step S1602 are the last group of quantized coefficients of the component, perform step S1624; if the quantized coefficients input in step S1602 are not the last group of quantized coefficients of the component, perform step S1602 again, and receive again a group of new quantized coefficients input by the quantization circuit 1620.

Step S1624: confirming run-length encoding information of all quantized coefficients of the component.

Step S1626: writing the run-length encoding information to the second buffer.

Step S1628: ending the process of extracting the information of the quantized coefficients of the component.

FIG. 17 is an exemplary diagram of a detailed procedure of the processing circuit 1440 in the encoding architecture shown in FIG. 15. FIG. 17 includes step S1702 to step S1716. The following describes the steps in detail with reference to FIG. 17.

Step S1702: detecting the status of the second buffer.

An initial state of the second buffer is an idle state.

Step S1704: determining whether the second buffer is in the idle state.

If the second buffer is in the idle state, perform step S1702 again; if the second buffer is not in the idle state, perform step S1706.

Step S1706: reading run-length encoding information in the second buffer.

Step S1708: reading a group of quantized coefficients in the first buffer.

For example, the processing circuit 1440 may send a data read request to the first buffer and the second buffer respectively, to read data in the buffers.

Step S1710: processing quantized coefficients corresponding to first four pixels.

Step S1712: processing quantized coefficients corresponding to last four pixels.

In the embodiments shown in FIG. 16 and FIG. 17, a group of quantized coefficients includes eight quantized coefficients corresponding to eight pixels on a one-to-one basis. Because the entropy encoding circuit includes four parallel VLCs, the entropy encoding circuit may process quantized coefficients corresponding to four pixels in one clock cycle. Therefore, the processing circuit 1440 may transmit eight quantized coefficients confirmed by run-length encoding information and corresponding to eight pixels to the entropy encoding circuit in two clock cycles, so that the rate of quantization matches the rate of entropy encoding.

Step S1714: obtaining a codebook corresponding to to-be-encoded quantized coefficients by performing a table lookup.

Before the entropy encoding circuit performs entropy encoding, the codebook corresponding to the to-be-encoded quantized coefficients needs to be first determined. Therefore, the processing circuit 1440 may determine an index of the codebook corresponding to the to-be-encoded quantized coefficients in a table lookup mode, and transfer the index of the codebook to the entropy encoding circuit.

Step S1716: determining whether run-length encoding information of a next group of quantized coefficients in the first buffer is confirmed.

If the run-length encoding information of the next group of quantized coefficients is confirmed, perform step S1708 again; if the run-length encoding information of the next group of quantized coefficients is not confirmed, perform step S1702 again.

The encoding apparatus described in any one of the foregoing embodiments may further include a scanning circuit, in addition to a transformation circuit, the quantization circuit, and the entropy encoding circuit. The transformation circuit may be configured to generate a transformation coefficient of an image block. The transformation coefficient is two-dimensional data. The quantization circuit may be configured to quantize the transformation coefficient to obtain a quantized coefficient. The quantized coefficient is still two-dimensional data. The scanning circuit may be configured to reorganize the two-dimensional data into a one-dimensional data sequence, and then perform subsequent run-length encoding and entropy encoding processes.

The scanning circuit can scan all quantized coefficients of a component of an image block in a preset sequence (such as a zigzag sequence) only after all the quantized coefficients of the component are obtained. In other words, the scanning circuit can start to scan quantized coefficients of a component only after all the quantized coefficients of the component are processed by the quantization circuit. This may reduce encoding efficiency of the encoding apparatus.

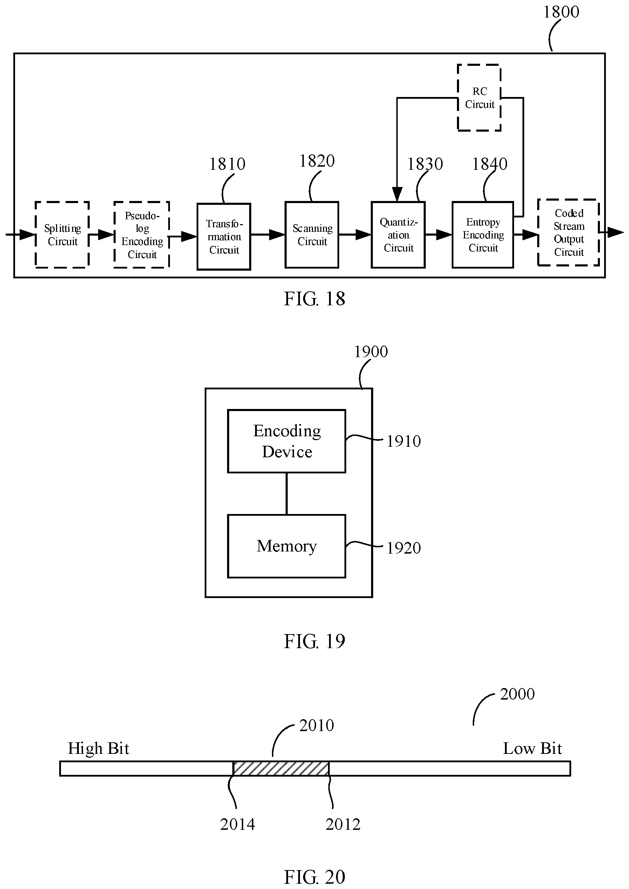

With reference to FIG. 18, the following describes in detail an encoding apparatus provided by an embodiment of this application, which can improve encoding efficiency.

As shown in FIG. 18, the encoding apparatus 1800 provided by this embodiment of this application may include a transformation circuit 1810, a scanning circuit 1820, a quantization circuit 1830, and an entropy encoding circuit 1840.

The transformation circuit 1810 may be configured to generate a transformation coefficient of an image block. Data is converted from one dimension to two dimensions through a transform operation. The scanning circuit 1820 may be configured to convert the transformation coefficient from two-dimensional data to a one-dimensional data sequence. The quantization circuit 1830 may be configured to quantize the one-dimensional data sequence to generate a quantized coefficient of the image block. The entropy encoding circuit 1840 may be configured to perform entropy encoding on the quantized coefficient.

Different from a conventional encoding mode, in this embodiment of this application, the quantized coefficient is not scanned; instead, the scanning process is performed in advance to directly scan the two-dimensional transformation coefficient. Therefore, scanning and quantizing processes can be tightly pipelined, and parallelism of the encoding apparatus can be improved.

Optionally, time of processing a component of the image block by the scanning circuit 1820 overlaps time of processing a component by the quantization circuit 1830. Processing time overlapping means that when the scanning circuit 1820 scans pixels of a component, the quantization circuit 1830 also processes pixels of the same component. The two operations are performed in parallel. For example, every time the scanning circuit 1820 completes processing of pixels corresponding to a clock cycle, the scanning circuit 1820 transfers data of the pixels corresponding to the clock cycle to the quantization circuit 1830, and the quantization circuit 1830 quantizes the data. Therefore, tight hardware pipelining is implemented between the scanning circuit 1820 and the quantization circuit 1830, and processing of the scanning circuit 1820 and processing of the quantization circuit 1830 can almost be completely parallelized. Certainly, this is not limited in this embodiment of this application. As long as the processing time of the scanning circuit 1820 overlaps the processing time of the quantization circuit 1830, the parallelism of the entire encoding apparatus can be improved.

In addition, the encoding apparatus 1800 may further include a splitting circuit, a pseudo-log encoding circuit, a coded stream output circuit, an RC circuit, and the like. For functions and implementation forms of the circuits, refer to the foregoing descriptions. Details are not described again herein.

An embodiment of this application further provides an encoding system. As shown in FIG. 19, the encoding system 1900 may include an encoding apparatus 1910 and a memory 1920. The encoding apparatus 1910 may be the encoding apparatus described in any one of the foregoing embodiments. The memory 1920 includes a ring storage space for storing a coded stream output by the encoding apparatus 1910. For example, it may be a double data rate (DDR) memory.

As shown in FIG. 20, a ring storage space 2010 is set in a memory space 2000. A storage address of the ring storage space 2010 includes a start address 2012 and an end address 2014. A coded stream may be written from a low address to a high address in the ring storage space 2010, and after the end address 2014 of the ring storage space 2010 is reached, writing of the coded stream may be continued from the start address 2012 of the ring storage space 2010 again.

The ring storage space provided by this embodiment of this application can avoid a system crash caused when the encoding apparatus 1910 continuously writes data to the memory 1920 when an error occurs, thereby improving robustness of the system.

With development of technologies, a bit depth and a resolution of an image (such as a RAW image) captured by an image sensor are increasingly high, causing a size of an image frame to be larger. If the image is directly written to the memory, bandwidth overheads of the system are high. Given the same resolution, if the image is written to the memory in a bit depth that is as low as possible, while a nearly same amount of information can be stored, bandwidth overheads may be reduced to some extent. A general practice in the industry is to perform log transform on an image of a high bit depth and then write the image to the memory. Log transform may convert the image from linear data to non-linear data. Log transform is equivalent to reserving a dynamic range of a dark region and narrowing a dynamic range of a bright region. After log transform, image data input by the memory to the encoding apparatus is not linear image data any longer. For some encoding apparatuses requiring that input image data should be linear data, the foregoing implementation makes the encoding apparatuses unable to work normally.

To solve the foregoing problem, in this embodiment of this application, circuits of the video coder shown in FIG. 4 may be adjusted, and an inverse log transformation circuit is added, where the inverse log transformation circuit may be configured to obtain non-linear data of an image after log transform, and perform inverse log transform on the non-linear data of the image to obtain linear data of the image. The inverse log transformation circuit may be located in a same circuit module as the splitting circuit 41, or may be located between splitting circuits 41. This is not limited in this embodiment of this application.

The circuits of the encoding apparatus illustrated above are functional circuits that are defined based on functions. Actually, different functional circuits may be implemented by a same hardware circuit or different hardware circuits. This is not limited in this embodiment of this application.

The encoding apparatus provided by this embodiment of this application may be implemented on a field programmable gate array (FPGA) platform, or may be implemented on an application specific integrated circuit (ASIC) platform. This is not limited in this embodiment of this application.

It should be noted that, provided that there is no conflict, each embodiment described in this application and/or the technical feature in each embodiment may be combined in any way, and a technical solution obtained after the combination shall also fall within the protection scope of this application.

The transformation coefficient mentioned in this application is a transformed coefficient, that is, a coefficient obtained after a transform operation; and the quantized coefficient mentioned in this application is a quantized coefficient, that is, a coefficient obtained after a quantization operation.

All or some of the foregoing embodiments may be implemented by software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedure or functions according to the embodiments of the present application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or may be a data storage device, such as a server or a data center, integrating one or more usable media. The usable medium may be a magnetic medium (for example, a floppy disk, a hard disk, or a magnetic tape), an optical medium (for example, a digital video disc (DVD)), a semiconductor medium (for example, a solid-state disk (SSD)), or the like.

A person of ordinary skill in the art may be aware that, the units and algorithm steps in the examples described with reference to the embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network elements. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An encoding apparatus, **characterized in that** the encoding apparatus comprises:
a first buffer, configured to buffer a quantized coefficient of an image block that is input by a quantization circuit;
an information generation circuit, configured to detect the quantized coefficient of the image block sequentially to obtain run-length encoding information, wherein the run-length encoding information comprises at least one of level-run information, zero-run information, or identification information of a direct current DC coefficient;
a second buffer, configured to buffer the run-length encoding information generated by the information generation circuit; and
a processing circuit, configured to: when the second buffer stores run-length encoding information, read the run-length encoding information from the second buffer, read the quantized coefficient corresponding to the run-length encoding information from the first buffer, and output the run-length encoding information and the corresponding quantized coefficient to an entropy encoding circuit.

2. The encoding apparatus according to claim 1, **characterized in that** the information generation circuit is specifically configured to:
when detecting the DC coefficient, generate the identification information of the DC coefficient; or
when detecting that the quantized coefficient of the image block changes from a non-zero alternating current AC coefficient to a zero AC coefficient, generate the level-run information; or
when detecting that the quantized coefficient of the image block changes from a zero AC coefficient to a non-zero AC coefficient, generate the zero-run information.

3. The encoding apparatus according to claim 1 or 2, **characterized in that** the first buffer and/or the second buffer are/is a first in first out FIFO-based buffer.

4. The encoding apparatus according to any one of claims 1 to 3, **characterized in that**, an input end of the information generation circuit is connected to the quantization circuit, and an output end of the information generation circuit is connected to the first buffer and the second buffer,
the information generation circuit is configured to:
receive the quantized coefficient input by the quantization circuit;
detect the input quantized coefficient, and when obtaining the run-length encoding information, store the run-length encoding information in the second buffer; and
store the input quantized coefficient in the first buffer.

5. The encoding apparatus according to any one of claims 1 to 4, **characterized in that** the encoding apparatus further comprises:
the quantization circuit, configured to quantize a transformation coefficient of the image block to generate a quantized coefficient, and input the quantized coefficient to the information generation circuit.

6. The encoding apparatus according to claim 5, **characterized in that** the encoding apparatus further comprises:
a transformation circuit, configured to generate the transformation coefficient of the image block; and
the entropy encoding circuit, configured to perform entropy encoding based on the run-length encoding information and the corresponding quantized coefficient output by the processing circuit.

7. The encoding apparatus according to claim 6, **characterized in that** the transformation circuit and the quantization circuit process a same quantity of pixels in each clock cycle.

8. The encoding apparatus according to claim 6 or 7, **characterized in that** the quantization circuit and the entropy encoding circuit process a same quantity of pixels in each clock cycle.

9. The encoding apparatus according to claim 6 or 7, **characterized in that** the quantity of pixels processed by the quantization circuit in each clock cycle is greater than the quantity of pixels processed by the entropy encoding circuit in each clock cycle.

10. The encoding apparatus according to claim 9, **characterized in that** the quantity of pixels processed by the quantization circuit in each clock cycle is an integer multiple of the quantity of pixels processed by the entropy encoding circuit in each clock cycle.

11. The encoding apparatus according to claim 6 or 7, **characterized in that** the quantity of pixels processed by the quantization circuit in each clock cycle is less than the quantity of pixels processed by the entropy encoding circuit in each clock cycle.

12. The encoding apparatus according to claim 11, **characterized in that** the quantity of pixels processed by the entropy encoding circuit in each clock cycle is an integer multiple of the quantity of pixels processed by the quantization circuit in each clock cycle.

13. The encoding apparatus according to any one of claims 6 to 12, **characterized in that** the image block is an image block based on a RAW format,
the encoding apparatus further comprises:
a pseudo-log encoding circuit, configured to transform data of the image block from linear data to nonlinear data.

14. The encoding apparatus according to any one of claims 6 to 13, **characterized in that** the encoding apparatus further comprises:
a splitting circuit, configured to split a to-be-encoded image to obtain the image block that can be independently encoded; and/or
a coded stream output circuit, configured to encapsulate encoded data output by the entropy encoding circuit to obtain a coded stream, and write the coded stream to a memory of a system by using a data bus of the system.

15. The encoding apparatus according to claim 14, **characterized in that** the encoding apparatus further comprises:
the memory, wherein the memory comprises a ring storage space for storing the coded stream output by the coded stream output circuit.

16. The encoding apparatus according to any one of claims 6 to 15, **characterized in that** the encoding apparatus further comprises:
a scanning circuit, configured to convert the transformation coefficient of the image block from two-dimensional data to a one-dimensional data sequence, wherein the quantization circuit is configured to quantize the one-dimensional data sequence to generate the quantized coefficient of the image block.

17. The encoding apparatus according to claim 16, **characterized in that** a time period of processing a component of the image block by the scanning circuit overlaps a time period of processing the component by the quantization circuit.

18. The encoding apparatus according to any one of claims 1 to 17, **characterized in that** the image block is a slice.

19. An encoding apparatus, **characterized in that** the encoding apparatus comprises:
a transformation circuit, configured to generate a transformation coefficient of an image block;
a scanning circuit, configured to convert the transformation coefficient from two-dimensional data to a one-dimensional data sequence;
a quantization circuit, configured to quantize the one-dimensional data sequence to generate a quantized coefficient of the image block; and
an entropy encoding circuit, configured to perform entropy encoding on the quantized coefficient.

20. The encoding apparatus according to claim 19, **characterized in that** a time period of processing a component of the image block by the scanning circuit overlaps a time period of processing the component by the quantization circuit.

21. The encoding apparatus according to claim 19 or 20, **characterized in that** the encoding apparatus further comprises a run-length encoding circuit, wherein the run-length encoding circuit is configured to first perform run-length encoding on the quantized coefficient before the entropy encoding circuit performs entropy encoding on the quantized coefficient.

22. The encoding apparatus according to claim 21, **characterized in that** the run-length encoding circuit comprises:
a first buffer, configured to buffer the quantized coefficient of the image block that is input by the quantization circuit;
an information generation circuit, configured to detect the quantized coefficient of the image block sequentially to obtain run-length encoding information, wherein the run-length encoding information comprises at least one of level-run information, zero-run information, and indication information of a direct current DC coefficient;
a second buffer, configured to buffer the run-length encoding information generated by the information generation circuit; and
a processing circuit, configured to: when the second buffer stores run-length encoding information, read the run-length encoding information from the second buffer, read the quantized coefficient corresponding to the run-length encoding information from the first buffer, and output the run-length encoding information and the corresponding quantized coefficient to the entropy encoding circuit.

23. The encoding apparatus according to claim 22, **characterized in that** the information generation circuit is specifically configured to:
when detecting the DC coefficient, generate the indication information of the DC coefficient; or
when detecting that the quantized coefficient of the image block changes from a non-zero alternating current AC coefficient to a zero AC coefficient, generate the level-run information; or
when detecting that the quantized coefficient of the image block changes from a zero AC coefficient to a non-zero AC coefficient, generate the zero-run information.

24. The encoding apparatus according to claim 22 or 23, **characterized in that** the first buffer and/or the second buffer are/is a first in first out FIFO-based buffer.

25. The encoding apparatus according to any one of claims 22 to 24, **characterized in that** an input end of the information generation circuit is connected to the quantization circuit, and an output end of the information generation circuit is connected to the first buffer and the second buffer,
the information generation circuit is configured to:
receive the quantized coefficient input by the quantization circuit;
detect the input quantized coefficient, and when obtaining the run-length encoding information, store the run-length encoding information in the second buffer; and
store the input quantized coefficient in the first buffer.

26. The encoding apparatus according to any one of claims 19 to 25, **characterized in that** the transformation circuit and the quantization circuit process a same quantity of pixels in each clock cycle.

27. The encoding apparatus according to any one of claims 19 to 26, **characterized in that** the quantization circuit and the entropy encoding circuit process a same quantity of pixels in each clock cycle.

28. The encoding apparatus according to any one of claims 19 to 26, **characterized in that** the quantity of pixels processed by the quantization circuit in each clock cycle is greater than the quantity of pixels processed by the entropy encoding circuit in each clock cycle.

29. The encoding apparatus according to claim 28, **characterized in that** the quantity of pixels processed by the quantization circuit in each clock cycle is an integer multiple of the quantity of pixels processed by the entropy encoding circuit in each clock cycle.

30. The encoding apparatus according to any one of claims 19 to 26, **characterized in that** the quantity of pixels processed by the quantization circuit in each clock cycle is less than the quantity of pixels processed by the entropy encoding circuit in each clock cycle.

31. The encoding apparatus according to claim 30, **characterized in that** the quantity of pixels processed by the entropy encoding circuit in each clock cycle is an integer multiple of the quantity of pixels processed by the quantization circuit in each clock cycle.

32. The encoding apparatus according to any one of claims 19 to 31, **characterized in that** the image block is an image block based on a RAW format; and
the encoding apparatus further comprises:
a pseudo-log encoding circuit, configured to transform data of the image block from linear data to nonlinear data.

33. The encoding apparatus according to any one of claims 19 to 32, **characterized in that** the encoding apparatus further comprises:
a splitting circuit, configured to split a to-be-encoded image to obtain the image block that can be independently encoded; and/or
a coded stream output circuit, configured to encapsulate encoded data output by the entropy encoding circuit to obtain a coded stream, and write the coded stream to a memory of a system by using a data bus of the system.

34. The encoding apparatus according to claim 33, **characterized in that** the encoding apparatus further comprises:
the memory, wherein the memory comprises a ring storage space for storing the coded stream output by the coded stream output circuit.

35. The encoding apparatus according to any one of claims 19 to 34, **characterized in that** the image block is a slice.

36. An encoding system, **characterized in that** the encoding system comprises:
the encoding apparatus according to any one of claims 6 to 35; and
a memory, wherein the memory comprises a ring storage space for storing a coded stream output by the encoding apparatus.
